# EUROPEAN PATENT SPECIFICATION

(11) **EP 2 536 179 B1**
(45) Date of publication and mention of the grant of the patent: **01.05.2019**
(21) Application number: 10845581.7
(22) Date of filing: 25.11.2010
(51) Int. Cl.: H04W 4/24, H04L 12/14, H04M 15/00

(54) **METHOD, DEVICE AND SYSTEM FOR SELECTING POLICY AND CHARGING RULES FUNCTION ENTITY**
VERFAHREN, VORRICHTUNG UND SYSTEM FÜR EINE FUNKTIONSEINHEIT ZUR AUSWAHL VON RICHTLINIEN UND LADEREGELN
PROCÉDÉ, DISPOSITIF ET SYSTÈME POUR SÉLECTIONNER UNE ENTITÉ DE FONCTION DE POLITIQUE ET DE RÈGLES DE FACTURATION

(30) Priority: 09.02.2010 CN 201010110457
(43) Date of publication of application: 19.12.2012
(73) Proprietor: ZTE Corporation, Shenzhen, Guangdong 518057 (CN)
(72) Inventor: WU, Jinhua, Shenzhen Guangdong 518057 (CN); ZHOU, Xiaoyun, Shenzhen Guangdong 518057 (CN); RUI, Tong, Shenzhen Guangdong 518057 (CN); SUN, Mo, Shenzhen Guangdong 518057 (CN)
(74) Representative: Novagraaf Technologies
(86) International application number: PCT/CN2010/079112
(87) International publication number: WO 2011/097911

(56) References cited:
- WO-A1-2009/058067
- WO-A1-2011/063853
- CN-A- 101 198 171
- CN-A- 101 217 810
- CN-A- 101 227 391
- US-A1- 2009 305 684
- ZTE: "Policy control based on groups of subscriber", 3GPP DRAFT; S2-097085_POLICY CONTROL BASED ON GROUPS OF SUBSCRIBER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Cabo; 20091116 - 20091120, 11 November 2009 (2009-11-11), XP050630331, [retrieved on 2009-11-11]
- "3rd Generation Partnership Project; Technical Specification Group Core Network and Terminals; Policy and Charging Control signalling flows and QoS parameter mapping; (Release 9)", 3GPP STANDARD; 3GPP TS 29.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 18 December 2009 (2009-12-18), pages 1-127, XP050401209, [retrieved on 2009-12-18]

## Description

### Field of the Invention

This disclosure relates to the technical field of communication, and in particular to a method, an apparatus and a system for selecting a Policy and Charging Rules Function (PCRF) entity.

### Background of the Invention

The Evolved Packet System (EPS) of the 3rd Generation Partnership Project (3GPP) consists of an Evolved Universal Terrestrial Radio Access Network (E-UTRAN), a Mobility Management Entity (MME), a Serving Gateway (S-GW), a Packet Data Network Gateway (P-GW or PDN GW), a Home Subscriber Server (HSS), the Authentication, Authorization and Accounting (AAA) server of the 3GPP, a PCRF entity and other supporting nodes.

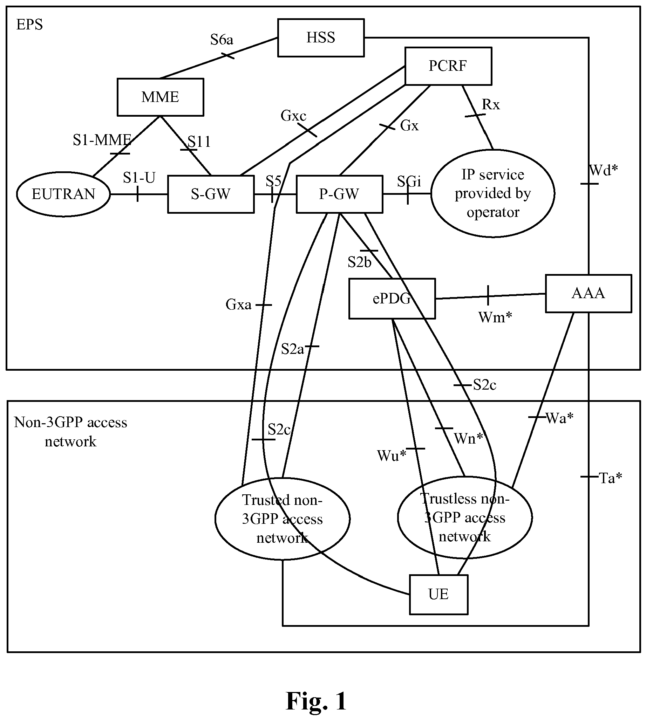

Fig. 1 is a diagram showing the architecture of an EPS. As shown in Fig. 1, a Policy and Charging Control (PCC) architecture is a part of the architecture of an EPS, and the EPS architecture mainly comprises the PCC function entities as follows: a PCRF entity, a Policy and Charging Enforcement Function (PCEF) entity, a Bearer Binding and Event Report Function (BBERF) entity, an Application Function (AF) entity of a service, and a Subscription Profile Repository (SPR). In this case, the PCRF entity and PCEF entity are in the P-GW, the BBERF entity may be in the S-GW, the AF entity of the service is in an IP service network of an operator, and the SPR can be combined with the HSS.

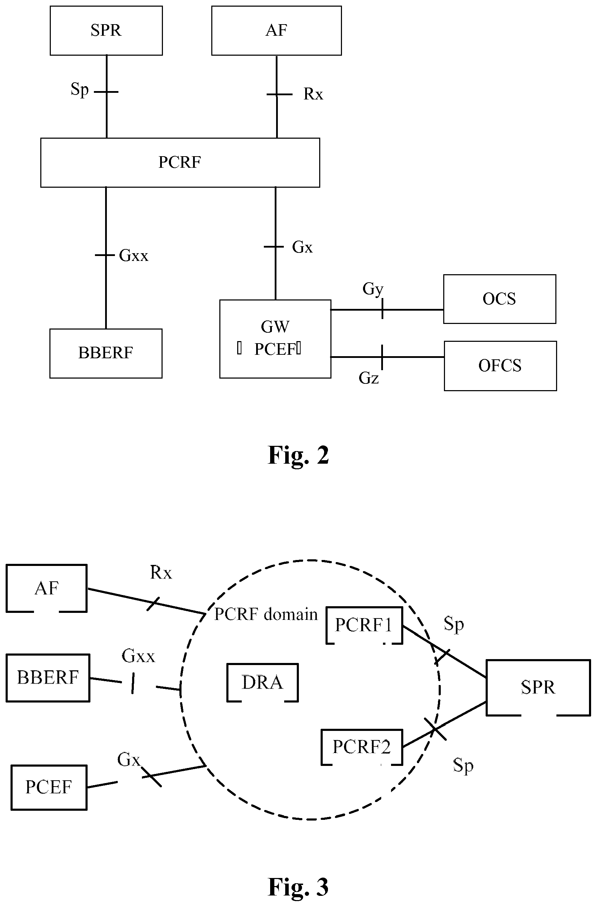

The PCC is adapted to all the IP Connectivity Access Networks (IP-CANs) of the 3GPP. Fig. 2 is a diagram showing the architecture of the conventional PCC system. In Fig. 2, the PCRF entity is mainly responsible for establishing the policy and charging rules, and sending the established PCC policy and charging rules to the PCEF entity via a Gx interface. And the PCEF entity installs and executes the PCC policy, reports the related events, and exchanges charging information with the charging system. The PCRF entity sends the Quality of Service (QoS) rule to the BBERF entity via a Gxx interface. The BBERF entity does not exchange charging information with the charging system and is only responsible for bearer binding and reporting related event. The AF entity provides the PCRF entity with service information via an Rx interface. The SPR saves the service information of user subscription. The PCRF entity may query the SPR about the service information of user subscription via an Sp interface. The PCEF entity sends via a Gy interface the online charging information to an Online Charging System (OSC) which is responsible for online charging statistics, and sends offline charging information to an Offline Charging System (OFCS) via a Gz interface.

At present, in the PCC architecture, the PCRF entity may dynamically send a PCC policy to the PCEF entity, and the policy information contains the information of QoS and charging. The PCRF entity establishes the PCC policy according to the related service information provided by the AF, the related bearer information reported by the PCEF entity and the service information of user subscription in the SPR. The PCC supports the dynamic consumption monitoring control to achieve dynamic policy decision based on real-time value of total consumption of network resources.

There may be multiple PCRF nodes in a Public Land Mobile Network (PLMN) of the EPS, and all the PCRF nodes belong to one or more diameter (PCRF) domains. The connection between one User Equipment (UE) and a PDN network is called an IP-CAN session. The PCC information of one IP-CAN session is only determined by one PCRF entity. To ensure that all the PCEF or BBERF related to one IP-CAN session are associated to the same PCRF, the EPS introduces a logic function module-a Diameter Routing Agent (DRA) in each diameter (PCRF) domain. When the UE establishes an IP-CAN session with a PDN, the DRA selects one PCRF for the IP-CAN session, and associates the PCEF or BBERF related to the IP-CAN session to the selected PCRF. Meanwhile, the DRA may also associate the AF related to this IP-CAN session with the selected PCRF.

Fig. 3 is a diagram showing the architecture of a DRA selecting a PCRF. As shown in Fig. 3, the DRA is responsible for managing the PCRFs in the PCRF domain, and the DRA can be realized by a redirect agent or a proxy agent. There are two or more PCRFs in the domain. When selecting the PCRF, the DRA may select different PCRF for different IP-CAN sessions of the same UE according to the network policy, or select the same PCRF entity for all the IP-CAN sessions of the same UE. That is, the DRA may select the PCRF entity based on either the level of the UE or the level of the IP-CAN.

However, in some application scenarios, for example, for a family package deal, multiple users in the package share the total allowable subscription consumption (the consumption may be time, data flow or other information), and the consumption will be saved in the SPR. When a user in the package deal becomes online and establishes an IP-CAN session, the SPR sends the total subscription consumption to the PCRF which is responsible for the PCC of the IP-CAN session of the user, and the PCRF establishes a consumption detection control policy. At the moment, if another user in the package deal becomes online and establishes an IP-CAN session, the DRA may select different PCRF for the IP-CAN sessions of different users since the PCRF is currently selected based on the level of the UE or that of the IP-CAN session. Since the SPR has sent the total consumption to the previous PCRF entity, if the SPR sends the same to the next PCRF again, the consumption detection control will conflict.

In the related art, when multiple users share the same subscription information (such as the total allowable subscription consumption), different PCRF will be selected for establishing the PCC of the IP-CAN session for each user, which however will cause a conflict in the PCC.

The related document "Policy control based on groups of subscriber", 3GPP DRAFT; S2-097085_POLICY CONTROL BASED ON GROUPS OF SUBSCRIBER) discloses policy control based on groups of subscriber. However, the above mentioned problem still remains unsolved by the above mentioned document.

### Summary of the Invention

The main objective of this disclosure is to provide a method for selecting a PCRF, to at least solve the above problem.

According to one aspect of this disclosure, a method for selecting the PCRF entity as defined by independent claim 1 is provided.

According to another aspect of this disclosure, a DRA as defined by independent claim 9 is provided.

According to yet another aspect of this disclosure, a system for selecting the PCRF entity as defined by independent claim 10 is provided.

Through this disclosure, when the IP-CAN session is established, the GW(PCEF) and/or GW(BBERF) will provide the main identifier of the UE to the DRA, and the DRA selects the same PCRF entity for the UEs sharing the subscription according to the main identifier. It solves the problem in the related art that when multiple users share the same subscription information, different PCRFs performing the PCC will cause conflict in the PCC. Consequently, the precision of the PCRF performing the PCC is improved.

### Brief Description of the Drawings

The drawings herein are used for providing a further understanding of this disclosure and constituting one part of this application. The schematic embodiments of this disclosure and description thereof are used for the explanation of this disclosure and not for limiting this disclosure. In the drawings:
Fig. 1 is a diagram showing the architecture of an EPS under a non-roaming condition in the related art;
Fig. 2 is a diagram showing the architecture of a PCC system under a non-roaming condition in the related art;
Fig. 3 is a diagram showing the architecture of a DRA selecting a PCRF;
Fig. 4 is a diagram showing the structure of a system for selecting a PCRF entity according to the embodiment of this disclosure;
Fig. 5 is a diagram showing the structure of a DRA according to the embodiment of this disclosure;
Fig. 6 is a flowchart of a method for selecting a PCRF entity according to the embodiment of this disclosure;
Fig. 7 is a diagram of a PCRF entity selected by the DRA according to the embodiment of this disclosure;
Fig. 8 is a flowchart according to the first embodiment of this disclosure; and
Fig. 9 is a flowchart according to the second embodiment of this disclosure.

### Detailed Description of the Embodiments

This disclosure will be described below in detail with reference to the drawings and in conjunction with the embodiments. It should be noted that, in the case of no conflict, the embodiments of this application and the features therein can be combined with each other.

The system for selecting the PCRF entity according to the embodiment of this disclosure will be described below.

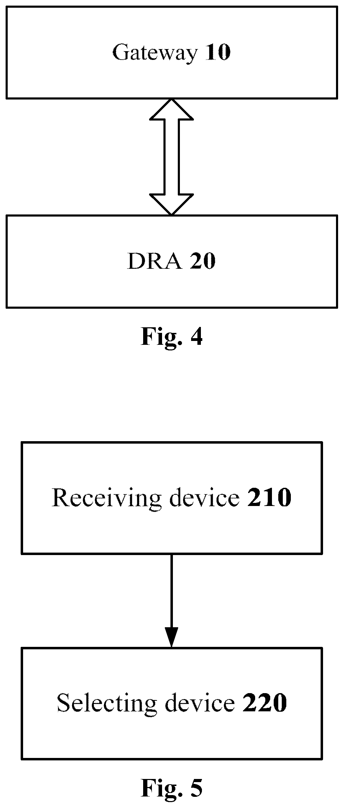

Fig. 4 shows a system for selecting a PCRF entity according to the embodiment of this disclosure. As shown in Fig. 4, the system for selecting the PCRF entity according to the embodiment of this disclosure comprises: a gateway 10 and a DRA 20.

In this case, the gateway 10 is used for, when an IP-CAN session is established for a UE, sending a message carrying the main identifier of the UE to the DRA 20; and the DRA 20 is used for selecting the PCRF entity for the IP-CAN session according to the main identifier in the message, wherein the UEs sharing the subscription information have the same main identifier.

In the above system, when the IP-CAN session is established for the UE, the DRA 20 may select the same PCRF entity for the UEs sharing the subscription information according to the main identifier in the message sent by the gateway 10, so as to avoid the conflict in the PCC.

In the specific implementation process, the function of the gateway 10 can be realized either by the PCEF in the P-GW as shown in Fig. 3, or by the BBERF in the S-GW as shown in Fig. 3. Or it can be realized by the combination of the PCEF and BBERF. That is, either the PCEF or the BBERF sends a message carrying the main identifier of the UE to the DRA 20, or both the PCEF and BBERF send the message to the DRA 20.

The DRA 20, after selecting the PCRF entity, routes the message from the gateway 10 to the selected PCRF entity. And the PCRF entity requests the SPR for sharing the subscription information. The UEs sharing the subscription information have the same main identifier, so that the DRA 20 selects the same PCRF entity for the UEs sharing the subscription information. Accordingly, the same PCRF will be selected for all the IP-CAN sessions of the UEs according to the same main identifier, and the PCRF may send a policy to the UEs respectively according to the shared subscription information, local policy and the like, such as the allowable consumption threshold of each UE.

In the present invention, the main identifier utilizes the existing user identifier. When multiple UEs share the subscription information, one of the multiple UEs is set as the main-UE, the rest one or more UEs are sub-UEs. The user identifier of the main-UE is serving as the main identifier of the multiple UEs, and the subscription information shared by the main-UE and its associated sub-UEs is saved in the SPR, such as the total allowable consumption (such as flow, duration, and events, etc.). In such way, the existing user identifier can serve as the main identifier, so as to reduce the change on the conventional system.

Alternatively, in an example not covered by the claims, new identifier may be added as the main identifier. That is, a main identifier is set for the multiple UEs sharing the subscription information. The multiple UEs corresponding to the main identifier and the subscription information shared by the multiple UEs are saved in the SPR. In such way, a main identifier, having corresponding length, type and the like, may be set as required.

The DRA according to the embodiment of this disclosure is described below, which can serve as the DRA 20 in the above system to be combined with the gateway 10.

Fig. 5 is a diagram showing the structure of a DRA according to the embodiment of this disclosure. As shown in Fig. 5, the DRA according to the embodiment of the present invention mainly comprises: a receiving device 210 and a selecting device 220.

The receiving device 210 is used for receiving the message from the gateway 10 when the IP-CAN session is established for the UE, and the selecting device 220 is used for selecting the PCRF entity for the IP-CAN session according to the main identifier in the message received by the receiving device 210, wherein the UEs sharing the subscription information have the same main identifier.

The DRA in the embodiment of this disclosure may select the same PCRF entity for the UEs sharing the subscription information according to the main identifier, so that the subscription information shared by the UEs may be sent to the same PCRF entity for control, thereby avoiding the conflict in the PCC.

The method for selecting the PCRF entity according to the embodiment of this disclosure is described below, which can be implemented by the system in Fig. 4 and/or the DRA in Fig. 5.

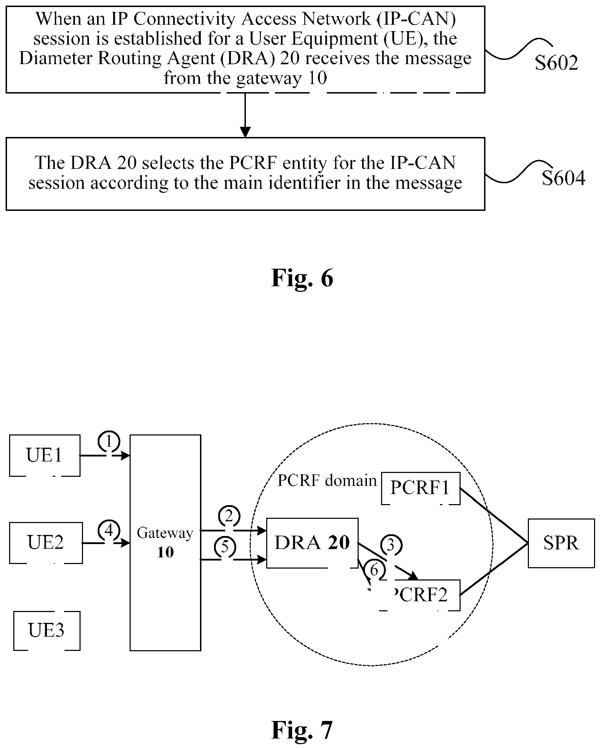

Fig. 6 is a flowchart of the method for selecting the PCRF entity according to the embodiment of this disclosure. As shown in Fig. 6, the method mainly comprises S602 to S604.

S602: When the IP-CAN session is established for the UE, the DRA 20 receives the message from the gateway 10.

S604: The DRA 20 selects the PCRF entity for the IP-CAN session according to the main identifier in the message, wherein the UEs sharing the subscription information have the same main identifier.

By the method in the embodiment of this disclosure, the DRA 20 may select the same PCRF entity for the UEs sharing the subscription information according to the main identifier of the UE when selecting the PCRF entity for the established IP-CAN session. The same PCRF entity performs PCC for the IP-CAN session of the UEs sharing the subscription information, thereby avoiding the conflict in the PCC.

In the specific implementation process, the method for the DRA 20 selecting the PCRF entity for the IP-CAN session according to the main identifier includes, but is not limited to, the following two methods.

The first method: after the PCRF entity is selected for one IP-CAN session, the main identifier is associated with the selected PCRF entity; and when selecting a PCRF entity for the IP-CAN session of a UE associated to the main identifier for the next time, it is determined whether the main identifier is associated with a PCRF entity, and if yes, the associated PCRF entity is selected.

With Fig. 7 as an example, UE1, UE2 and UE3 share the subscription information in Fig. 7. There are two PCRF entities, PCRF1 and PCRF2, in the PCRF domain. And UE1 is the main-UE, with the user identifier ID1.

By the first method, when UE1 requests to establish the IP-CAN session, the gateway 10 (PCEF and/or BBERF) sends the message carrying the ID1 to the DRA 20. And the DRA 20, after receiving the message, determines that no PCRF entity is associated with the ID1. Then, the DRA 20 allocates the PCRF2 to the IP-CAN session being currently requested to be established, and associates the ID1 with the PCRF 2. When UE2 requests to establish the IP-CAN session, the gateway 10 sends the message carrying the ID1 to the DRA 20. The DRA 20, after receiving the message, determines that the PCRF2 is associated with the ID1, and then allocates the PCRF 2 to the IP-CAN session being currently requested to be established.

By the method, when a user sharing the subscription data requests to establish an IP-CAN session, it is possible to establish an association relationship between the main identifier of the user and the selected PCRF entity. When a next user sharing the subscription data requests to establish the IP-CAN session, the same PCRF entity is selected according to the association relationship. Meanwhile, only small storage space of the DRA 20 is needed for the storage of the association relationship, so that it can be locally stored in the DRA 20, which avoids changing the conventional network architecture.

Furthermore, in order to further reduce the required storage space of the DRA 20, a timer may be set to delete the stored association relationship between the main identifier and PCRF entity regularly. Specifically, a timer may be set for the stored association relationship between a pair of main identifiers and PCRF entity respectively. The association relationship will be deleted if the association relationship is not used within a predetermined duration. That is, no IP-CAN session is requested to be established by the user associated with the main identifier within a certain period of time, the stored association relationship between the main identifier and PCRF entity can be deleted.

The second method: an association table as shown in Table 1 is predetermined to respectively record the PCRF entity corresponding to each main identifier recorded in the SPR. When the IP-CAN session is established, the PCRF entity corresponding to the main identifier is selected according to the current main identifier of the UE. In the specific application, the association table may be either saved in the DRA 20 or in a third party database. The DRA 20 queries the database to acquire the PCRF entity corresponding to the main identifier.

**Table 1**

| Main identifier | Identifier of PCRF entity |
|---|---|
| ID1 | A |
| ID4 | A |
| ID8 | B |

In the actual application, the user identifier associated with the main identifier, the PDN identifier of the IP-CAN session and the like can also be recorded in the association table.

Similarly, with Fig. 7 as an example, when UE1 requests to establish the IP-CAN session, the gateway 10 (PCEF and/or BBERF) sends the message carrying the ID1 to the DRA20. The DRA20, after receiving the message, queries the association table to acquire the identifier AAAA of the PCRF entity associated with the ID1 (it is assumed that AAAA is the identifier of the PCRF2), and then allocates the PCRF2 to the IP-CAN session being currently requested to be established. When UE2 requests to establish the IP-CAN session, the gateway sends the message carrying the ID1 to the DRA 20. The DRA 20, after receiving the message, acquires the identifier AAAA of the PCRF entity associated with the ID1 (it is assumed that AAAA is the identifier of the PCRF2), and then allocates the PCRF2 to the IP-CAN session being currently requested to be established.

In the specific implementation process, after selecting the PCRF entity for the IP-CAN session, the DRA 20 routes the message from the gateway to the selected PCRF entity. In the specific implementation process, if the DRA 20 is the redirect agent, the DRA 20 will return the redirect message, which carries the address of the selected PCRF entity, to the gateway 10. The gateway 10, after receiving the redirect message, sends the message to the PCRF entity according to the address of the PCRF entity. And if the DRA 20 is the proxy agent, the DRA 20 directly sends the message to the selected PCRF entity according to the address of the selected PCRF entity. Accordingly, it can route the message to the selected PCRF entity.

After the PCRF entity receives the message, it sends the subscription document request message to the SPR to request the subscription information of the UE of the IP-CAN session currently established. The SPR receives the subscription document request message and then sends the subscription information of the UE to the PCRF entity, and the PCRF entity establishes the corresponding charging policy according to the subscription information, local policy and other information, so as to implement the charging and policy control of the IP-CAN session.

In a preferred example of the embodiment of this disclosure, if multiple UEs share all the subscription information, and the SPR sends all the subscription information to the PCRF entity in the first time, then it is possible that the PCRF entity does not initiate the subscription request flow to the SPR when subsequently the UE requests to establish the IP-CAN session. Under such circumstance, the SPR will further send the identifiers of all the UEs associated with the subscription information while sending the subscription information. The PCRF entity, when receiving the information from the SPR, will save the subscription information as well as the identifiers of all the UEs associated with it. After receiving the above message and before sending the subscription document request message to the SPR, the PCRF entity will first determine whether the subscription information corresponding to the identifier of the current UE is locally saved, and if yes, it will not send the subscription document request message, otherwise, PCRF utility will send the subscription document request message. Accordingly, the number of interactions between the PCRF entity and the SPR can be reduced, and the procedure can be simplified.

In the specific implementation process, the gateway 10 may be the S-GW and/or P-GW. Specifically, it can be the PCEF entity in the P-GW and/or the BBERF2 in the S-GW. Therefore, the function of the gateway 10 in the embodiment of this disclosure may be realized by the PCEF and/or BBERF2.

To further understand the technical solution provided by the embodiment of this disclosure, the technical solution is described below by specific embodiments.

### First Embodiment

What described in this embodiment is the flow of selecting the PCRF entity when a main-UE and a sub-UE are accessed to the 3GPP system through an E-UTRAN, a trusted non-3GPP network or a not-trusted non-3GPP network to establish the IP-CAN session in a non-roaming scenario. The main-UE and sub-UE(s) share the subscription information, the sub-UE carries (sends) the main identifier to the DRA during the session establishment process, the DRA is the redirect agent, and a PCRF client (such as the BBERF, PCEF and AF) interacts with the DRA to select the PCRF in the domain.

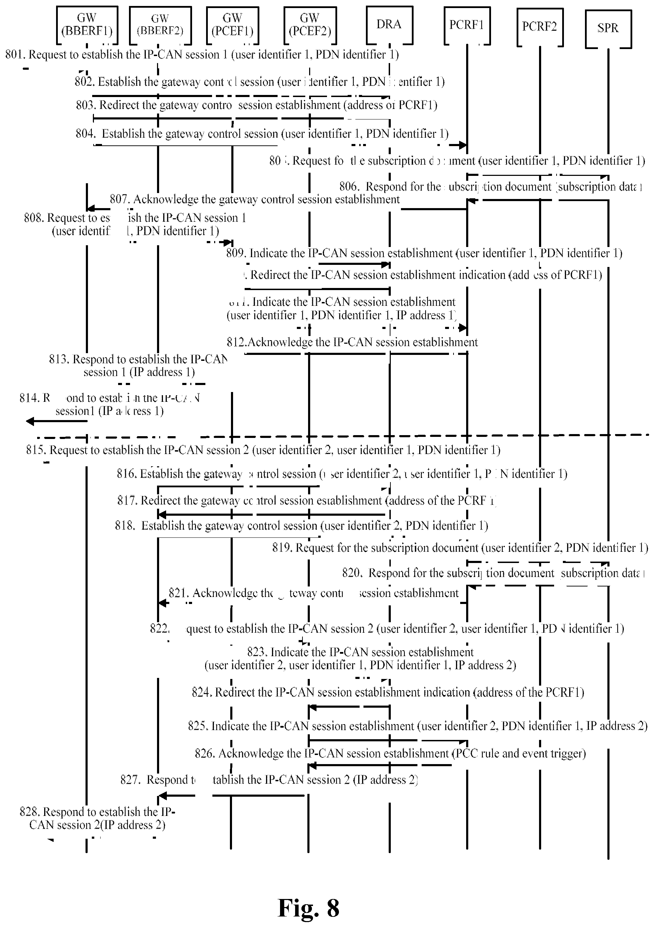

Fig. 8 is a flowchart of the embodiment, and as shown in Fig. 8, it mainly comprises:
S801: The main-UE is accessed through the E-UTRAN or the trusted non-3GPP network and requests to establish the IP-CAN session. The S-GW or the trusted non-3GPP access gateway/BBERF1 (for purpose of simplicity, the description is made below with BBERF1 as an example) receives the message of requesting to establish the IP-CAN session 1, wherein the message carries the user identifier 1 and the PDN identifier 1.
S802: The BBERF1 sends a gateway control session establishment message to the DRA, wherein the gateway control session establishment message carries the user identifier 1 and the PDN identifier 1.
S803: The DRA searches the saved information according to the user identifier 1 and the PDN identifier 1, and finds that no PCRF is selected for the user and the corresponding PDN identifier, and that no PCRF is selected for any sub-UE associated with the main identifier (user identifier 1) and sharing the subscription data. Then, the DRA selects the PCRF1 for the user or the IP-CAN session, saves the corresponding relationship (the user identifier 1, PDN identifier 1 and the address of the PCRF 1), and returns the redirect message to the BBERF1, wherein the redirect message carries the address of the selected PCRF1.
S804: The BBERF1 sends a gateway control session establishment message to the PCRF1, wherein the gateway control session establishment message carries the user identifier 1 and the PDN identifier 1.
S805: The PCRF1 sends a subscription document request message to the SPR, wherein the subscription document request message carries the user identifier 1 and the PDN identifier 1.
S806: The SPR returns the subscription information.
S807: The PCRF entity establishes a policy, such as a PCC rule, a QoS rule, an event trigger and the like, according to the subscription information, network policy, access network information and the like. The PCRF1 returns a gateway control session establishment acknowledgement message to the BBERF1, which message carries the QoS rule and event trigger. The BBERF1 installs the policy.
S808: The gateway where the BBERF1 is located sends a message of requesting to establish the IP-CAN session 1 to the gateway where the PCEF1 is located, wherein the message carries the user identifier 1 and the PDN identifier 1; and the gateway where the PCEF1 is located allocates the IP address 1 to the established IP-CAN session 1.
S809: The PCEF1 sends an IP-CAN session establishment indication message to the DRA, wherein the indication message carries the user identifier 1, PDN identifier 1 and IP address 1.
S810: The DRA searches the saved information according to the user identifier 1 and the PDN identifier 1, to find that the PCRF1 has been selected for the IP-CAN session 1, and updates the corresponding relationship (the user identifier 1, PDN identifier 1, IP address 1 and PCRF1 address). The DRA returns the redirect message to the PCEF1, which carries the address of the PCRF1.
S811: The PCEF1 sends an IP-CAN session establishment indication message to the PCRF1, wherein the indication message carries the user identifier 1, PDN identifier 1 and IP address 1.
S812: The PCRF1 returns the corresponding PCC rule and event trigger established in S807 according to the user identifier 1 and the PDN identifier 1.
S813: The gateway where the PCEF1 is located returns to the gateway where the BBERF1 is located a response of establishing IP-CAN session 1, which carries the IP address 1.
S814: The gateway where the BBERF1 is located returns a response of establishing the IP-CAN session 1, which carries the IP address 1.
   By the above mentioned flow, the main-UE establishes the IP-CAN session 1, and the PCRF1 sends policy control information to the policy execution entity (PCEF1 and BBERF1) related to the IP-CAN session, so as to implement the policy control. When the main-UE accesses a service, the PCRF1 will further dynamically send the policy control information, such as, monitoring and controlling the consumption of a service accessed by the main-UE according to the subscription.
S815: The sub-UE is accessed through the E-UTRAN or the trusted non-3GPP network to request to establish the IP-CAN session, and the S-GW or the trusted non-3GPP access gateway/BBERF2 (for the purpose of simplicity, the description is made below with the BBERF2 as an example) receives the message of requesting to establish the IP-CAN session 2, wherein the message carries the user identifier 2, the PDN identifier 1 and the user identifier 1 (the associated main identifier). The BBERF1 and BBERF2 may be either the same or different.
S816: The BBERF2 sends a gateway control session establishment message to the DRA, wherein the message carries the user identifier 2, PDN identifier 1 and user identifier 1 (i.e. , the associated main identifier).
S817: The DRA searches the saved information according to the user identifier 2, PDN identifier 1 and user identifier 1, to find that no PCRF entity is selected for the user and corresponding PDN identifier. But it is found that the PCRF1 has been selected for the main-UE sharing the subscription data by searching the saved information according to the user identifier 1 and the PDN identifier 1. A corresponding relationship is established (user identifier 2, PDN identifier 1 and address of the PCRF1). The DRA returns the redirect message to the BBERF2, which carries the PCRF1 address.
S818: The BBERF2 sends a gateway control session establishment message to the PCRF1, wherein the gateway control session establishment message carries the user identifier 2 and the PDN identifier 1.
S819: Optionally, the PCRF1 sends a subscription document request message to the SPR, which carries the user identifier 2 and the PDN identifier 1. If the main-UE and the sub-UEs share all the subscription information and the SPR sends all the subscription information in the first time, then it is possible that the PCRF does not initiate the subscription request flow of the SPR to the subsequent associated user.
S820: If receiving the subscription document request message from the PCRF1, the SPR returns the subscription information.
S821: The PCRF entity establishes a policy, such as a PCC rule, a QoS rule, event trigger and the like, according to the subscription information, network policy, access network information and the like. The PCRF1 returns a gateway control session establishment acknowledgement message, which carries the QoS rule and event trigger, to the BBERF2. The BBERF2 installs the policy.
S822: The gateway where the BBERF2 is located sends a message of requesting to establish an IP-CAN session 2 to the gateway where the PCEF2 is located, wherein the message carries the user identifier 2, PDN identifier 1 and user identifier 1. The gateway where the PCEF2 is located allocates the IP Address 2 to the established IP-CAN session 2. The PCEF1 and the PCEF2 may be either the same or different.
S823: The PCEF2 sends an IP-CAN session establishment indication message to the DRA, wherein the message carries the user identifier 2, PDN identifier 1, IP Address 2 and user identifier 1 (i.e. , the associated main identifier).
S824: The DRA searches the saved information according to the user identifier 2 and the PDN identifier 1, to find that the PCRF1 has been selected for the IP-CAN session 2, and updates the corresponding relationship (the user identifier 2, PDN identifier 1, IP Address 1 and address of the PCRF1). The DRA returns the redirect message to the PCEF2, which carries the address of the PCRF1.
S825: The PCEF2 sends an IP-CAN session establishment indication message to the PCRF1, wherein the message carries the user identifier 2, PDN identifier 1 and IP Address 2.
S826: The PCRF1 returns the corresponding PCC rule and event trigger established in S821 according to the user identifier 2 and the PDN identifier 1.
S827: The gateway where the PCEF2 is located returns a response message of responding to establishment of the IP-CAN session 2, to the gateway where the BBERF2 is located, which carries IP address 2.
S828: The gateway where the BBERF2 is located returns a response message of responding to establishment of the IP-CAN session 2, which carries IP address 2.

By the above mentioned flow, the sub-UE establishes the IP-CAN session 2, and the PCRF1 sends policy control information to the policy execution entity (PCEF2 and BBERF2) related to the IP-CAN session, so as to implement the policy control. When the sub-UE accesses a service, the PCRF1 will further dynamically send the policy control information. At the moment, the PCRF can uniformly monitor and control according to the shared subscription data the consumption of the service accessed by the main-UE and sub-UE.

The above mentioned flow is as follows: when the main-UE accesses first, the main-UE first selects the PCRF entity through the DRA, then the sub-UE initiates a session establishment which carries the main-UE identifier, and then the DRA routes all the sub-UE to the same PCRF entity according to the main-UE. For the situation that the sub-UE accesses first, the sub-IE first selects the PCRF entity through the DRA, and then the main-UE accesses and initiates the session establishment, and the DRA queries that the sub-UE has carried the main-UE identifier, and then the DRA routes the main-UE to the same PCRF entity as that of the sub-UE. Other processing flow is the same.

### Second Embodiment

What described in this embodiment is the flow of selecting the PCRF entity when a main-UE and a sub-UE are accessed to the 3GPP system through an E-UTRAN, a trusted non-3GPP network or a not-trusted non-3GPP network to establish the IP-CAN session in a non-roaming scenario. The main-UE and sub-UE share the subscription information. In the IP-CAN session establishment process, the sub-UE carries (sends) the main identifier to the DRA, which is the proxy agent. A PCRF client (such as the BBERF, PCEF and AF) interacts with the DRA to select the PCRF in the domain.

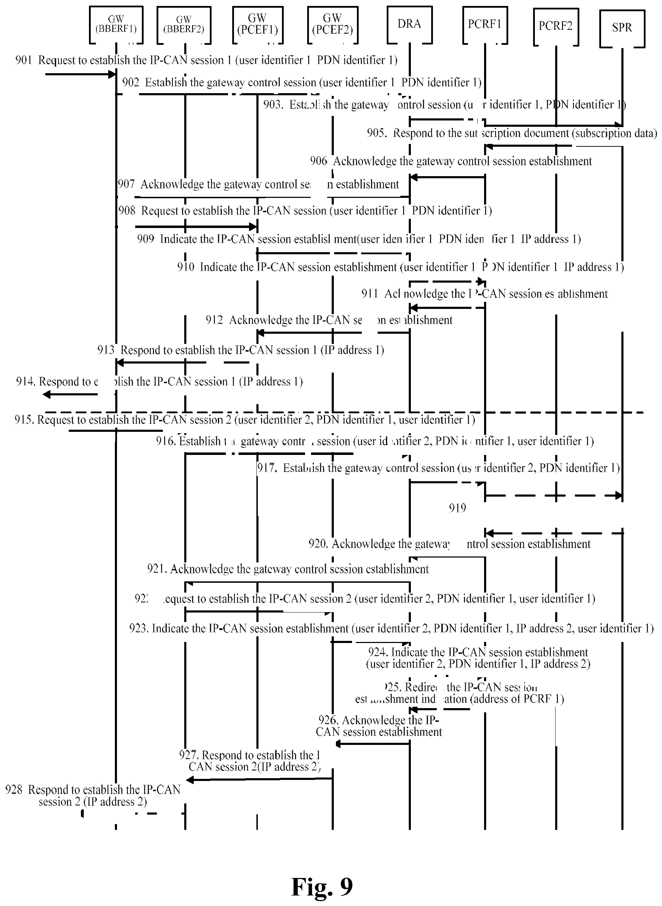

Fig. 9 is a flowchart of this embodiment. As shown in Fig. 9, the flow of selecting the PCRF in the embodiment mainly comprises the following steps.
S901: The main-UE is accessed through the E-UTRAN or the trusted non-3GPP network to request to establish the IP-CAN session. The S-GW or the trusted non-3GPP access gateway/BBERF1 receives the message of requesting to establish the IP-CAN session 1, wherein the message carries the user identifier 1 and the PDN identifier 1.
S902: The BBERF1 sends a gateway control session establishment message to the DRA, wherein the message carries the user identifier 1 and the PDN identifier 1.
S903: The DRA searches the saved information according to the user identifier 1 and the PDN identifier 1, to find that no PCRF is selected for the user and the corresponding PDN identifier, and the DRA finds that no PCRF is selected for any sub-UEs associated with and sharing the subscription data with the main-UE. Then, the DRA selects the PCRF1 for the IP-CAN session of the user, saves the corresponding relationship (the user identifier 1, PDN identifier 1 and address of the PCRF 1), and forwards the gateway control session establishment message to the PCRF1, wherein the message carries the user identifier 1 and the PDN identifier 1.
S904: The PCRF1 sends a subscription document request message to the SPR, wherein the message carries the user identifier 1 and the PDN identifier 1.
S905: The SPR returns the subscription information.
S906: The PCRF1 establishes a policy, such as a PCC rule, a QoS rule, and an event trigger and the like, according to the subscription information, network policy, access network information and the like. The PCRF1 returns a gateway control session establishment acknowledgement message, which carries the QoS rule and event trigger, to the DRA.
S907: The DRA forwards a gateway control session establishment acknowledgement message, which carries the QoS rule and event trigger, to the BBERF1. The BBERF1 installs the policy.
S908: The gateway where the BBERF1 is located sends a message of requesting to establish an IP-CAN session 1 to the gateway where the PCEF1 is located, wherein the message carries the user identifier 1 and the PDN identifier 1. The gateway where the PCEF1 is located allocates the IP Address 1 to the established IP-CAN session 1.
S909: The PCEF1 sends an IP-CAN session establishment indication message to the DRA, wherein the message carries the user identifier 1, PDN identifier 1 and IP address 1.
S910: The DRA searches the saved information according to the user identifier 1 and the PDN identifier 1, to find that the PCRF1 has been selected for the IP-CAN session 1, and updates the corresponding relationship (the user identifier 1, PDN identifier 1, IP Address 1 and address of the PCRF1). The DRA forwards an IP-CAN session establishment indication message to the PCRF1, wherein the message carries the user identifier 1, PDN identifier 1 and IP Address 1.
S911: The PCRF1 returns the corresponding PCC rule and event trigger established in S906 according to the user identifier 1 and the PDN identifier 1.
S912: The DRA forwards a message to the PCEF1, wherein the message carries the PCC rule and event trigger.
S913: The gateway where the PCEF1 is located returns a response message of responding to establishment of the IP-CAN session 1 to the gateway where the BBERF1 is located, wherein the response message carries the IP Address 1.
S914: The gateway where the BBERF1 is located returns a response message of responding to establishment of the IP-CAN session 1, which carries the IP Address 1.
   By the above mentioned flow, the main-UE establishes the IP-CAN session 1, and the PCRF1 sends policy control information to the policy execution entity (PCEF1 and BBERF1) related to the IP-CAN session, so as to implement the policy control. When the main-UE accesses a service, the PCRF1 will further dynamically send the policy control information, such as, monitoring and controlling the consumption of the service accessed by the main-UE according to the subscription.
S915: The sub-UE is accessed through the E-UTRAN or the trusted non-3GPP network to request to establish the IP-CAN session, and the S-GW or the trusted non-3GPP access gateway/BBERF2 receives the message of requesting to establish the IP-CAN session 2, wherein the message carries the user identifier 2, the PDN identifier 1 and the user identifier 1 (the associated main identifier). The BBERF1 and BBERF2 may be either the same or different.
S916: The BBERF2 sends a gateway control session establishment message to the DRA, wherein the message carries the user identifier 2, PDN identifier 1 and user identifier 1 (the associated main identifier).
S917: The DRA searches the saved information according to the user identifier 2 and the PDN identifier 1, to find that no PCRF entity is selected for the user and corresponding PDN identifier. But the DRA finds that the PCRF1 has been selected for the main-UE sharing the subscription data by searching the saved information according to the user identifier 1 and the PDN identifier 1. Then a corresponding relationship is established (user identifier 2, PDN identifier 1 and address of the PCRF1). The DRA forwards the gateway control session establishment message to the PCRF entity, wherein the message carries the user identifier 2 and the PDN identifier 1.
S918: Optionally, the PCRF1 sends a subscription document request message, which carries the user identifier 2 and the PDN identifier 1, to the SPR. If the main-UE and sub-UEs share all the subscription information and the SPR sends all the subscription information in the first time, then it is possible that the PCRF does not initiate the subscription request flow of the SPR to the subsequent associated user.
S919: If receiving the subscription document request message of the PCRF1, the SPR returns the subscription information.
S920: The PCRF1 establishes a policy, such as a PCC rule, a QoS rule, and an event trigger etc., according to the subscription information, network policy, access network information and the like. The PCRF1 returns a gateway control session establishment acknowledgement message, which carries the QoS rule and event trigger, to the DRA.
S921: The DRA returns a gateway control session establishment acknowledgement message, which carries the QoS rule and event trigger, to the BBERF2. The BBERF2 installs the policy.
S922: The gateway where the BBERF2 is located sends a message of requesting to establish an IP-CAN session 2 to the gateway where the PCEF2 is located, wherein the message carries the user identifier 2, PDN identifier 1 and user identifier 1 (the associated main identifier). The gateway where the PCEF2 is located allocates the IP Address 2 to the established IP-CAN session 2. The PCEF1 and the PCEF2 may be either the same or different.
S923: The PCEF2 sends an IP-CAN session establishment indication message to the DRA, wherein the message carries the user identifier 2, PDN identifier 1, IP Address 2 and user identifier 1 (the associated main identifier).
S924: The DRA searches the saved information according to the user identifier 2 and the PDN identifier 1, to find that the PCRF1 has been selected for the IP-CAN session 2, and updates the corresponding relationship (the user identifier 2, PDN identifier 1, IP Address 1 and address of the PCRF1). The DRA forwards an IP-CAN session establishment indication message to the PCRF1, wherein the message carries the user identifier 2, PDN identifier 1, IP Address 2 and user identifier 1 (the associated main identifier).
S925: The PCRF1 returns the corresponding PCC rule and event trigger established in S921 according to the user identifier 2 and the PDN identifier 1.
S926: The DRA returns the PCC rule and event trigger to the PCEF2. The PCEF2 installs the policy.
S927: The gateway where the PCEF2 is located returns a response message of responding to establishment of the IP-CAN session 2 to the gateway where the BBERF2 is located, wherein the response message carries the IP Address 2.
S928: The gateway where the BBERF2 is located returns a response message of responding to establishment of the IP-CAN session 2, wherein the response message carries the IP Address 2.

By the above mentioned flow, the sub-UE establishes the IP-CAN session 2, and the PCRF1 sends policy control information to the policy execution entity (PCEF2 and BBERF2) related to the IP-CAN session, so as to implement the policy control. When the sub-UE accesses a service, the PCRF1 will further dynamically send the policy control information. In this case, the PCRF can uniformly monitor and control according to the shared subscription data the consumption of the service accessed by the main-UE and sub-UE.

The above mentioned flow is as follows: the main-UE first selects the PCRF by the DRA, then the sub-UE initiates a session establishment, which carries the main-UE identifier, and the DRA routes the main-UE to the same PCRF. For the situation that the sub-UE first selects the PCRF by the DRA and then the main-UE is routed, the main-UE initiates the session establishment, and the DRA queries that the sub-UE has carried the main-UE identifier, and then the DRA routes the main-UE to the same PCRF as that of the sub-UE. Other processing flow is the same.

It can be seen from the above mentioned description that, in the embodiments of this disclosure, when the IP-CAN session is established, the GW (PCEF) and/or GW (BBERF) will provide the main identifier of the UE to the DRA, and the DRA selects the same PCRF for the UEs sharing the subscription according to the main identifier. Therefore, it can solve the problem in the related art that when multiple users share the subscription information, conflict is caused in PCC because different PCRFs perform PCC. Consequently, the precision of PCRF performing PCC is improved. In addition, in the embodiments of this disclosure, the DRA can save the corresponding relationship between the selected PCRF entity and the main identifier, and can carry out selection according to the corresponding relationship, thereby reducing the change on the conventional network architecture.

Obviously, those skilled in the art shall understand that respective models or steps of this disclosure may be implemented by general computing devices and centralized in a single computing device or allocated in a network consisting of multiple computing devices. Optionally, the models or steps may be implemented by program codes executable by the computing devices, so that they may be stored in a storage device and executed by the computing devices, or respectively made into integrated circuit modules or a single integrated circuit module. In this way, this disclosure is not limited to any specific combination of hardware and software.

The above are only preferred embodiments of this disclosure and are not used for limiting this disclosure. For those skilled in the art, this disclosure may have various modifications and changes.

## Claims

1. A method for selecting a Policy and Charging Rules Function, PCRF, entity, comprising the steps of:
receiving (S602), by a Diameter Routing Agent, DRA, a message from a gateway when an IP Connectivity Access Network, IP-CAN, session is established for a User Equipment, UE;and
selecting (S604), by the DRA, a PCRF entity for the IP-CAN session according to a main identifier in the message, wherein multiple UEs sharing subscription information have a same main identifier, the multiple UEs comprise a main UE and one or more sub-UEs, and the main identifier is the user identifier of the main-UE.

2. The method according to claim 1, **characterized in that** the step of selecting by the DRA the PCRF entity for the IP-CAN session according to the main identifier in the message comprises:
if the DRA determines that the main identifier is associated to one PCRF entity, allocating, by the DRA, the associated PCRF entity to the IP-CAN session; and
if the DRA determines that the main identifier is associated to no PCRF entity, allocating, by the DRA, one PCRF entity to the IP-CAN session and setting the main identifier associated to the PCRF entity.

3. The method according to claim 1, **characterized in that** after selecting, by the DRA, a PCRF entity for the IP-CAN session according to a main identifier in the message, the method further comprises: routing, by the DRA, the message to the selected PCRF entity.

4. The method according to claim 3, **characterized in that** the step of routing by the DRA the message to the selected PCRF entity comprises:
returning, by the DRA, a redirect message to the gateway, wherein the redirect message carries the address of the selected PCRF entity, and
sending, by the gateway, the message to the PCRF entity according to the address of the PCRF entity.

5. The method according to claim 3, **characterized in that** the step of routing by the DRA the message to the selected PCRF entity comprises:
sending, by the DRA, the message to the PCRF entity according to the address of the PCRF entity.

6. The method according to any one of claims 3 to 5, **characterized in that** after routing by the DRA the message to the selected PCRF entity, the method further comprises:
sending, by the PCRF entity, a subscription document request message to a Subscription Profile Repository, SPR, wherein the subscription document request message carries the identifier of the UE;
receiving and saving, by the PCRF entity, information returned by the SPR, wherein the information comprises subscription information of the UE, and
establishing, by the PCRF entity, a policy according to the subscription information.

7. The method according to claim 6, **characterized in that**
the information returned by the SPR further comprises: identifiers of all UEs associated with the subscription information; and
before sending by the PCRF entity the subscription document request message to the SPR, the method further comprises: determining, by the PCRF entity, that no subscription information associated with the identifier of the UE is saved locally.

8. The method according to any one of claims 1 to 5, **characterized in that** the gateway comprises: a service gateway and/or a packet data network gateway.

9. A Diameter Routing Agent, DRA (20), comprising:
a receiving device (210), configured to receive a message, which is sent from a gateway when an IP Connectivity Access Network, IP-CAN, session is established for a User Equipment, UE: and
a selecting device (220), configured to select a Policy and Charging Rules Function, PCRF, entity for the IP-CAN session according to a main identifier in the message, wherein multiple UEs sharing subscription information have a same main identifier, the multiple UEs comprise a main UE and one or more sub-UEs, and the main identifier is the user identifier of the main-UE.

10. A system for selecting a Policy and Charging Rules Function, PCRF, entity, the system comprising:
a gateway (10), configured to send a message to a Diameter Routing Agent, DRA, when an IP Connectivity Access Network, IP-CAN, session is established for a User Equipment, UE; and
the DRA (20), configured to select a PCRF entity for the IP-CAN session according to a main identifier in the message, wherein multiple UEs sharing subscription information have a same main identifier, the multiple UEs comprise a main UE and one or more sub-UEs, and the main identifier is the user identifier of the main-UE.

## Patentansprüche

1. Verfahren zum Auswählen einer Policy and Charging Rules Function-, PCRF, Entität, das die Schritte umfasst des:
Empfangens (S602), durch einen Diameter Routing Agent, DRA, einer Nachricht von einem Gateway, wenn eine IP Connectivity Access Network-, IP-CAN, Sitzung für ein User Equipment, UE, aufgebaut wird; und
Auswählens (S604), durch den DRA, einer PCRF-Entität für die IP-CAN-Sitzung gemäß einer Hauptkennung in der Nachricht,
wobei mehrere UEs, die sich Teilnehmerinformationen teilen, ein und dieselbe Hauptkennung aufweisen, die mehreren UEs ein Haupt-UE und ein oder mehrere Unter-UEs umfassen, und die Hauptkennung die Benutzerkennung des Haupt-UEs ist.

2. Verfahren nach Anspruch 1, **dadurch gekennzeichnet, dass** der Schritt des Auswählens, durch den DRA, der PCRF-Entität für die IP-CAN-Sitzung gemäß der Hauptkennung in der Nachricht umfasst:
wenn der DRA bestimmt, dass die Hauptkennung mit einer PCRF-Entität verknüpft ist, Zuweisen, durch den DRA, der verknüpften PCRF-Entität zur IP-CAN-Sitzung; und
wenn der DRA bestimmt, dass die Hauptkennung mit keiner PCRF-Entität verknüpft ist, Zuweisen, durch den DRA, einer PCRF-Entität zur IP-CAN-Sitzung, und Einstellen der Hauptkennung so, dass sie mit der PCRF-Entität verknüpft ist.

3. Verfahren nach Anspruch 1, **dadurch gekennzeichnet, dass** nach dem Auswählen, durch den DRA, einer PCRF-Entität für die IP-CAN-Sitzung gemäß einer Hauptkennung in der Nachricht das Verfahren weiter umfasst: Routen, durch den DRA, der Nachricht zur ausgewählten PCRF-Entität.

4. Verfahren nach Anspruch 3, **dadurch gekennzeichnet, dass** der Schritt des Routens, durch den DRA, der Nachricht zur ausgewählten PCRF-Entität umfasst:
Zurückgeben, durch den DRA, einer Umleitungsnachricht an das Gateway, wobei die Umleitungsnachricht die Adresse der ausgewählten PCRF-Entität übermittelt, und
Senden, durch das Gateway, der Nachricht an die PCRF-Entität gemäß der Adresse der PCRF-Entität.

5. Verfahren nach Anspruch 3, **dadurch gekennzeichnet, dass** der Schritt des Routens, durch den DRA, der Nachricht zur ausgewählten PCRF-Entität umfasst:
Senden, durch den DRA, der Nachricht an die PCRF-Entität gemäß der Adresse der PCRF-Entität.

6. Verfahren nach einem der Ansprüche 3 bis 5, **dadurch gekennzeichnet, dass** nach dem Routen, durch den DRA, der Nachricht zur ausgewählten PCRF-Entität das Verfahren weiter umfasst:
Senden, durch die PCRF-Entität, einer Teilnehmerdokument-Anfragenachricht an ein Subscription Profile Repository, SPR, wobei die Teilnehmerdokument-Anfragenachricht die Kennung des UEs übermittelt;
Empfangen und Speichern, durch die PCRF-Entität, von Informationen, die vom SPR zurückgegeben werden, wobei die Informationen Teilnehmerinformationen des UEs umfassen, und
Festlegen, durch die PCRF-Entität, einer Richtlinie gemäß den Teilnehmerinformationen.

7. Verfahren nach Anspruch 6, **dadurch gekennzeichnet, dass**
die vom SPR zurückgegebenen Informationen weiter umfassen: Kennungen aller UEs, die mit den Teilnehmerinformationen verknüpft sind; und
vor dem Senden, durch die PCRF-Entität, der Teilnehmerdokument-Anfragenachricht an das SPR das Verfahren weiter umfasst: Bestimmen, durch die PCRF-Entität, dass keine Teilnehmerinformationen, die mit der Kennung des UEs verknüpft sind, lokal gespeichert sind.

8. Verfahren nach einem der Ansprüche 1 bis 5, **dadurch gekennzeichnet, dass** das Gateway umfasst: ein Dienstgateway und/oder ein Paketdatennetz-Gateway.

9. Diameter Routing Agent, DRA (20), umfassend:
eine Empfangsvorrichtung (210), die dazu konfiguriert ist, eine Nachricht zu empfangen, die von einem Gateway gesendet wird, wenn eine IP Connectivity Access Network-, IP-CAN, Sitzung für ein User Equipment, UE, aufgebaut wird; und
eine Auswahlvorrichtung (220), die dazu konfiguriert ist, eine Policy and Charging Rules Function-, PCRF, Entität für die IP-CAN-Sitzung gemäß einer Hauptkennung in der Nachricht auszuwählen, wobei mehrere UEs, die sich Teilnehmerinformationen teilen, ein und dieselbe Hauptkennung aufweisen, die mehreren UEs ein Haupt-UE und ein oder mehrere Unter-UEs umfassen, und die Hauptkennung die Benutzerkennung des Haupt-UEs ist.

10. System zum Auswählen einer Policy and Charging Rules Function-, PCRF, Entität, wobei das System umfasst:
ein Gateway (10), das dazu konfiguriert ist, eine Nachricht an einen Diameter Routing Agent, DRA, zu senden, wenn eine IP Connectivity Access Network-, IP-CAN, Sitzung für ein User Equipment, UE, aufgebaut wird; und
den DRA (20), der dazu konfiguriert ist, eine PCRF-Entität für die IP-CAN-Sitzung gemäß einer Hauptkennung in der Nachricht auszuwählen, wobei mehrere UEs, die sich Teilnehmerinformationen teilen, ein und dieselbe Hauptkennung aufweisen, die mehreren UEs ein Haupt-UE und ein oder mehrere Unter-UEs umfassen, und die Hauptkennung die Benutzerkennung des Haupt-UEs ist.

## Revendications

1. Procédé pour sélectionner une entité de fonction de règles de politique et de facturation, PCRF, comprenant les étapes de :
la réception (S602), par un agent de routage de diamètre, DRA, d'un message à partir d'une passerelle lorsqu'une session de réseau d'accès de connectivité IP, IP-CAN, est établie pour un équipement utilisateur, UE ; et
la sélection (S604), par le DRA, d'une entité de PCRF pour la session d'IP-CAN selon un identifiant principal dans le message,
dans lequel de multiples UE partageant des informations d'abonnement ont un même identifiant principal, les multiples UE comprennent un UE principal et un ou plusieurs UE subsidiaires, et l'identifiant principal est l'identifiant utilisateur de l'UE principal.

2. Procédé selon la revendication 1, **caractérisé en ce que** l'étape de la sélection, par le DRA, de l'entité de PCRF pour la session d'IP-CAN selon l'identifiant principal dans le message comprend :
si le DRA détermine que l'identifiant principal est associé à une entité de PCRF, l'attribution, par le DRA, de l'entité de PCRF associée à la session d'IP-CAN ; et
si le DRA détermine que l'identifiant principal n'est associé à aucune entité de PCRF, l'attribution, par le DRA, d'une entité de PCRF à la session d'IP-CAN et le réglage de l'identifiant principal associé à l'entité de PCRF.

3. Procédé selon la revendication 1, **caractérisé en ce que**, après la sélection, par le DRA, d'une entité de PCRF pour la session d'IP-CAN selon un identifiant principal dans le message, le procédé comprend en outre : le routage, par le DRA, du message vers l'entité de PCRF sélectionnée.

4. Procédé selon la revendication 3, **caractérisé en ce que** l'étape du routage, par le DRA, du message vers l'entité de PCRF sélectionnée comprend :
le renvoi, par le DRA, d'un message de redirection à la passerelle, dans lequel le message de redirection porte l'adresse de l'entité de PCRF sélectionnée, et
l'envoi, par la passerelle, du message à l'entité de PCRF selon l'adresse de l'entité de PCRF.

5. Procédé selon la revendication 3, **caractérisé en ce que** l'étape du routage, par le DRA, du message vers l'entité de PCRF sélectionnée comprend :
l'envoi, par le DRA, du message à l'entité de PCRF selon l'adresse de l'entité de PCRF.

6. Procédé selon l'une quelconque des revendications 3 à 5, **caractérisé en ce que**, après le routage, par le DRA, du message vers l'entité de PCRF sélectionnée, le procédé comprend en outre :
l'envoi, par l'entité de PCRF, d'un message de demande de document d'enregistrement à un référentiel de profil d'abonnement, SPR, dans lequel le message de demande de document d'enregistrement porte l'identifiant de l'UE ;
la réception et la sauvegarde, par l'entité de PCRF, d'informations renvoyées par le SPR, dans lequel les informations comprennent des informations d'abonnement de l'UE, et
l'établissement, par l'entité de PCRF, d'une politique selon les informations d'abonnement.

7. Procédé selon la revendication 6, **caractérisé en ce que**
les informations renvoyées par le SPR comprennent en outre : des identifiants de tous les UE associés aux informations d'abonnement ; et
avant l'envoi, par l'entité de PCRF, du message de demande de document d'enregistrement au SPR, le procédé comprend en outre : la détermination, par l'entité de PCRF, qu'aucune information d'abonnement associée à l'identifiant de l'UE n'est sauvegardée localement.

8. Procédé selon l'une quelconque des revendications 1 à 5, **caractérisé en ce que** la passerelle comprend : une passerelle de service et/ou une passerelle de réseau de données par paquets.

9. Agent de routage de diamètre, DRA, (20), comprenant :
un dispositif de réception (210), configuré pour recevoir un message, qui est envoyé à partir d'une passerelle lorsqu'une session de réseau d'accès de connectivité IP, IP-CAN, est établie pour un équipement utilisateur, UE ; et
un dispositif de sélection (220), configuré pour sélectionner une entité de fonction de règles de politique et de facturation, PCRF, pour la session d'IP-CAN selon un identifiant principal dans le message, dans lequel de multiples UE partageant des informations d'abonnement ont un même identifiant principal, les multiples UE comprennent un UE principal et un ou plusieurs UE subsidiaires, et l'identifiant principal est l'identifiant utilisateur de l'UE principal.

10. Système pour sélectionner une entité de fonction de règles de politique et de facturation, PCRF, le système comprenant :
une passerelle (10), configurée pour envoyer un message à un agent de routage de diamètre, DRA, lorsqu'une session de réseau d'accès de connectivité IP, IP-CAN, est établie pour un équipement utilisateur, UE ; et
le DRA (20), configuré pour sélectionner une entité de PCRF pour la session d'IP-CAN selon un identifiant principal dans le message, dans lequel de multiples UE partageant des informations d'abonnement ont un même identifiant principal, les multiples UE comprennent un UE principal et un ou plusieurs UE subsidiaires, et l'identifiant principal est l'identifiant utilisateur de l'UE principal.
